# EUROPEAN PATENT SPECIFICATION

(11) **EP 0 710 685 B1**
(45) Date of publication and mention of the grant of the patent: **21.01.2004**
(21) Application number: 95307780.7
(22) Date of filing: 01.11.1995
(51) Int. Cl.: C08G 63/42, C08G 63/85, C08G 63/84, C08G 63/58, C08G 63/78, C08G 63/06, C08G 63/16

(54) **Process for producing aliphatic polyester**
Verfahren zur Herstellung von aliphatischen Polyester
Procédé pour la préparation d'un polyester aliphatique

(30) Priority: 01.11.1994 JP 26909594; 01.11.1994 JP 26909694; 29.03.1995 JP 7155995
(43) Date of publication of application: 08.05.1996
(60) Divisional application: 01202050.9
(73) Proprietor: NIPPON SHOKUBAI CO., LTD., Chuo-ku, Osaka-shi, Osaka-fu 541 (JP)
(72) Inventor: Itoh, Hiroshi, Kobe-shi, Hyogo 651-12 (JP); Yamamoto, Yoshinobu, Suita-shi, Osaka 565 (JP); Fukuhara, Koji, Osaka-shi, Osaka 533 (JP); Shiroshima, Masahiro, Osaka-shi, Osaka 533 (JP); Kobayashi, Hiroya, Minoo-shi, Osaka 562 (JP)
(74) Representative: West, Alan Harry

(56) References cited:
- EP-A- 0 486 437
- EP-A- 0 572 675
- EP-A- 0 622 390
- WO-A-94/14870
- DE-A- 4 318 204
- FR-A- 1 416 402

## Description

The present invention relates to a process for producing an aliphatic polyester, and more particularly to a process for producing an aliphatic polyester which is biodegradable and is readily processed by molding into shaped articles such as fibers, sheets and films.

Polyesters including aromatic and aliphatic polyesters, are used in a variety of fields for different purposes. Aromatic polyesters are used mainly used as materials for films and molded articles. Copolymers of aromatic polyesters with aliphatic polyesters are used as adhesives and coating materials and block copolymers are used as thermoplastic elastomers to produce various kinds of molded articles.

In general, aliphatic polyesters are mainly used as raw materials for polyurethanes, as plasticizers for polyvinyl chloride and as medical materials. Since aliphatic polyesters are characterized by biodegradability, they are used as shaped articles such as fibers, sheets and films by combining from with one or more additives as occasion demands.

Conventionally, aliphatic polyesters are produced by esterifying directly an aliphatic dicarboxylic acid and an aliphatic glycol, or transesterification between an alkyl ester of an aliphatic dicarboxylic acid and an aliphatic glycol to synthesize a glycol ester and/or a prepolymer thereof and then heating the resulting compound with stirring under a pressure between 0.4 and 1 mmHg, i.e., under a high vacuum, for a long period to achieve polycondensation. Note that water is produced as esterification proceeds while a glycol is produced during transesterification.

However, aliphatic polyesters produced by the above processes have a number-average molecular weight of less than 20,000. In addition, Japanese Patent No. Heisei 5-310898 describes a process of producing an aliphatic polyester, which comprises transesterification of an aliphatic dicarboxylic acid and an aliphatic glycol using a catalyst at a temperature between 180 and 230°C, and under a pressure between 0.05 and 0.1 mmHg. Also, Japanese Patent No. Heisei 6-322081 describes a process of producing an aliphatic polyester whose number-average molecular weight (Mn) is not less than 5,000, which comprises reacting an aliphatic dicarboxylic acid and an aliphatic glycol using a catalyst at a temperature of 240°C, under a pressure of not more than 1 mmHg, and preferably not more than 0.5 mmHg.

However, the conventional process, in which polycondensation is performed while heating with stirring under high vacuum for a long period readily causes side reactions and decomposition of the aliphatic polyester. In other words, the process produces an abundance of volatile components, that is, by-products and low molecular weight compounds (oligomer) produced by decomposition. Since the volatile components have substantially no value, the process can not produce an inexpensive polyester.

Further, such an abundance of volatile components readily causes blockages between the reactor and a trap. Thus, the reaction must be suspended frequently to remove the volatile components. Moreover, when the volatile components can not be collected completely in the trap, a groat amount of the volatile components flows into a vacuum pump. This not only causes a reduced vacuum (a rise in pressure), but also degrades the performance of the vacuum pump and causes failures. Thus, the reaction takes an extremely long period and an aliphatic polyester having a predetermined molecular weight can not be produced. addition, the process demands a high-performance vacuum pump. However, such a high-performance vacuum pump is expensive, and the volatile components easily flow into it, thereby requiring a considerable effort to maintain its performance. Thus, the above-mentioned conventional process has low industrial feasibility. To eliminate this problem, there is an increasing need for a process capable of producing an aliphatic polyester in an industrially efficient manner using a general vacuum pump whose ultimate vacuum is about 0.5 mmHg, and preferably about 1 mmHg.

A process of producing an aliphatic polyester, without using a high-performance pump is known, involving a ring-opening copolymerization of a cyclic acid anhydride and a cyclic ether. For example, Japanese Official Patent Gazette No. Showa 42-26708 proposed a process for producing an aliphatic polyester comprising copolymerization of a cyclic acid anhydride with an alkylene oxide (i.e., cyclic ether) using a catalyst system comprising as one component an organometallic compound of a metal of groups I to III in the periodic table.

In Examples 1 to 6 of the above patent, a cyclic anhydride, an alkylene oxide, a solvent and a catalyst are placed and dissolved in a polymerization tube to perform a nitrogen substitution. Subsequently, this tube is sealed, and copolymerization is performed at 80°C (Examples 1 to 4 and 6) or 30°C (Example 5). The pressure in the sealed tube is higher than atmospheric owing to nitrogen gas and solvent vapor. The alkylene oxides used are epichlorohydrin in Examples 1 to 3 and propylene oxide in Examples 4 to 6. The cyclic anhydrides used are phthalic anhydride in Examples 1 to 4, endo-cis-bicyclo(2,2,1)-5-heptene-2,3-dicarboxylic anhydride in Example 5, and succinic anhydride in Example 6. The catalysts used are triethylaluminum in Examples 1 to 3 and 6, diethylzinc in Example 4, and diethylzinc and water in Example 5.

Among Examples 1 to 6 an aliphatic polyester is formed only in Example 6 which involves ring-opening copolymerization of propylene oxide with succinic anhydride. However, the aliphatic polyester formed is inferior in that its melting point is low and thus it has less heat resistance since the cyclic ether used is propylene oxide.

In ring-opening copolymerization according to the process of the above patent there is formed a polymer having a melting point lower than that of a polymer obtained by polycondensation of a dicarboxylic acid containing succinic acid as a main component with a glycol containing ethylene glycol as a main component. The reason is that in the polycondensation dicarboxylic acid molecules and glycol molecules always bond alternately; in contrast, in the ring-opening copolymerization not only cyclic anhydride molecules and cyclic ether molecules bond alternately, but also cyclic ether molecules bond with each other to form polyether chains.

In addition, in the process of the above patent the reaction takes as long as five to ten days. Reaction time may be shortened by raising the reaction temperature by introducing a succinic anhydride and an ethylene oxide collectively into the vessel. However, this causes the melting point of a resulting aliphatic polyester to be lowered.

The present inventors have formerly proposed producing an aliphatic polyester without using a high-performance vacuum pump, in Japanese Official Patent Gazette No. Heisei 6-306154, using ring-opening copolymerization of a cyclic acid anhydride containing succinic anhydride as a main component with a cyclic ether containing ethylene oxide as a main component using trialkoxyaluminium as a catalyst. However, the number-average molecular weight of the resulting aliphatic polyester was less than 25,000. Films or sheets, produced from the polyester are fragile or cannot be stretched. Although the aliphatic polyester can have a higher molecular weight if it is reacted with a chain-elongating agent (i.e., cross linking agent), it not only increases the number of steps in the process, but also possibly causes fish eyes on a resulting film. There is therefore an increasing need for a process capable of producing an aliphatic polyester having the number-average molecular weight of not less than 20,000, efficiently in a single step.

The present invention seeks to provide a process which is able to produce a biodegradable aliphatic polyester which has a higher melting point than similar products of conventional processes, and preferably has a number average molecular weight of not less than 20,000.

In accordance with a first aspect of the invention, there is provided a process for producing an aliphatic polyester comprising ring-opening polymerisation of a cyclic acid anhydride with a cyclic ether in the presence of at least one zirconium compound catalyst selected from zirconium 2-ethylhexanoate, zirconium carbonate and zirconium hydroxide.

In accordance with a second aspect of the invention, there is provided also a process for producing an aliphatic polyester comprising ring-opening polymerisation of a cyclic acid anhydride having a purity of not less than 99.5% with a cyclic ether having a purity of not less than 99.5%. The resulting aliphatic polyester preferably has a number average molecular weight of not less than 20,000.

The latter process is suitably carried out in the presence of a catalyst, preferably a zirconium compound such as an alkoxy zirconium or an oxyzirconium salt, or a trialkoxyaluminum.

In this specification, a reference to a volatile component indicates a low-molecular weight component such as an excess of raw material, water generated by esterification, glycol generated by ester exchange, by-products generated by side-reactions, degradation products generated by decomposition of aliphatic polyesters and the like. Melting points were measured in an atmosphere of nitrogen at a temperature elevation rate of 6K/minute by a general thermal analytical instrument (differential scanning calorimetry instrument). Viscosity was measured at a shear rate of 100 s⁻¹ according to JIS K 7199 at reaction temperature of a target aliphatic polyester under conditions of capillary diameter (inner diameter) of 0.5 mm, and a ratio of capillary length to diameter (length/diameter) = 20. The measurements by differential scanning calorimetry, i.e., the measurements of melting point were performed in a manner to be described later.

The methods according to the invention for producing an aliphatic polyester include:
(a) ring-opening copolymerization of cyclic acid anhydride and a cyclic ether in the presence of a particular zirconium compound; and
(b) polycondensation of the polymer produced by ring-opening polymerization of cyclic anhydride and cyclic ether both of 99.5% or higher purity in the presence of a catalyst.

The cyclic acid anhydride used is not especially limited, and any cyclic acid anhydride having at least one acid anhydride in a molecule may be used. In addition, to produce an aliphatic polyester in which a cyclic acid anhydride and a cyclic ether are linearly bonded, a cyclic acid anhydride having one acid anhydride in a molecule is preferable.

Examples of such cyclic anhydride include succinic anhydride, maleic anhydride, itaconic anhydride, glutaric anhydride, adipic anhydride, citraconic anhydride, phthalic acid and trimellitic anhydride; polyfunctional acid anhydride such as pyromellitic dianhydride, benzophenone tetracarboxylic dianhydride, 1,2,3,4-butanetetracarboxylic dianhydride, homopolymers of maleic anhydride and copolymers of maleic anhydride with vinyl acetate, ethylene, isobuthylene, isobuthyl vinyl ether, acrylonitrile or styrene. Only one of the above cyclic acid anhydride may be adopted, or two or more may be mixed.

In view of melting point, biodegradability and cost performance of the resulting aliphatic polyester, a cyclic anhydride having succinic anhydride as a main component is preferable. The content of succinic anhydride in the cyclic anhydride is preferably not less than 50 mole percent, more preferably not less than 80 mole percent. If the content of succinic anhydride is less than 50 mole percent, the resulting aliphatic polyester may have low melting point and insufficient biodegradability.

The impurity content of the cylic anhydride in process (a) is preferably not more than 2 percent by weight, more preferably not more than 1 percent by weight, and still more preferably not more than 0.5 percent by weight. When the impurity content of the cyclic anhydride is more than 2 percent by weight, the average molecular weight (Mn) of the resulting aliphatic polyester would be lowered. Therefore, it is industrially unpreferable.

The cyclic ether is not especially limited, and any cyclic acid anhydride having at least one epoxy group in the molecule may be used. Additionally, to obtain aliphatic polyester in which a cyclic acid anhydride and a cyclic ether are linearly bonded, a cyclic ether having one epoxy group in a molecule is preferably adopted.

Examples of such cyclic ethers include: ethylene oxide, propylene oxide, cyclohexene oxide, styrene oxide, epichlorohydrin, allyl glycidyl ether, phenyl glycidyl ether, tetrahydrofuran, oxetane, 1,3-dioxolane; polyethylene glycol diglycidyl ether, polypropylene glycol diglycidyl ether, polytetramethylene glycol diglycidyl ether, resorcinol diglycidyl ether, neopentyl glycol diglycidyl ether, 1,6-hexanediol diglycidyl ether, diglycidyl adipate, diglycidyl ophthalate, diglycidyl terephthalate, hydroquinone diglycidyl ether, bisphenol S diglycidyl ether, glycerol diglycidyl ether, sorbitol polyglycidyl ether, sorbitan polyglycidyl ether, polyglycerol polyglycidyl ether, pentaerythritol polyglycidyl ether, diglycerol polyglycidyl ether, triglycidyl tris(2-hydroxyethyl)isocyanurate, glycerol triglycidyl ether and trimethylol propane polyglycidyl ether. Only one of the above cyclic ethers may be adopted, or two or more may be mixed.

In view of melting point, biodegradability and cost performance of the resulting aliphatic polyester a cyclic ether having ethylene oxide as the main component is preferable. The content of ethylene oxide in the cyclic ether is preferably not less than 50 mole percent, more preferably not less than 80 mole percent. When the content of ethylene oxide is less than 50 mole percent, the resulting aliphatic polyester may have low melting point and insufficient biodegradability.

The impurity content of the cyclic ether in process (a) is preferably not more than 2 percent by weight, more preferably not more than 1 percent by weight, and still more preferably not more than 0.5 percent by weight. When the impurity content of the cyclic ether is more than 2 percent by weight, the average molecular weight (Mn) of the resulting aliphatic polyester would be lowered. Therefore, it is industrially unpreferable.

For the above-mentioned reason, among combinations of cyclic acid anhydride and cyclic ether, a combination of cyclic acid anhydride having succinic anhydride as a main component and cyclic ether having ethylene oxide as a main component is preferable, and a combination of succinic anhydride and ethylene oxide is most preferable.

To the cyclic anhydride and the cyclic ether, other monomer that can be copolymerizable with these monomers may be added as long as the effects of the present invention can be ensured. In the present invention, such monomer is not especially limited. Examples of the monomer include: cyclic ethers such as β-butyrolactone, pivalolactone, ε-caprolactone, δ-valerolactone, glycolide and lactide; cyclic sulfur compounds such as ethylene sulfide, propylene sulfide, propiosultone and propiosultam; cyclic nitrogen compounds such as ε-caprolactam, ω-caprylolactam, ethylene imine, 2-phenyl oxazoline, and succinimide; and cyclic carbonate such as ethylene carbonate. Only one of the above monomer may be adopted, or two or more may be mixed.

the ring-opening polymerization reaction may be carried out by such a polymerization method as polymerization in a solvent, bulk polymerization and the like in a presence of a catalyst (ring-opening polymerization catalyst).

Examples of the catalyst used in process (b) include: alkoxyzirconium (zirconium compounds) such as tetramethoxyzirconium, tetraethoxyzirconium, tetra-iso-propoxyzirconium, tetra-iso-buthoxyzirconium, tetra-n-buthoxyzirconium and tetra-t-buthoxyzirconium; oxyzirconium salts (zirconium compound) such as zirconium chloride oxide, zirconium propionate, zirconium 2-ethylhexanoate, zirconium stearate, zirconium nitrate, zirconium hydroxide, zirconium carbonate hydroxide oxide, zirconium phosphate, zirconium sulfate and zirconyl carbonate ammonium; metallocene compounds such as zirconocene dichloride and titanocene dichloride; metal alkoxides such as triethoxyaluminum, tri-n-propoxyaluminum, tri-iso-propoxyaluminum, tri-n-buthoxyaluminum, tri-iso-buthyoxyaluminum, tri-sec-buthoxyaluminm, mono-sec-buthoxy-di-iso-propoxyaluminum, diisopropoxyaluminum ethylacetoacetate, aluminum tris(ethylacetoacetate), tetraethoxytitanium, tetra-iso-propoxytitanium, tetra-n-propoxytitanium, tetra-n-buthoxytitanium, tetra-sec-buthoxytitanium, tetra-t-buthoxytitanium, tri-iso-propoxygallium, tri-iso-propoxyantimony, tri-iso-buthoxyantimony, trimethyoxyboron, triethyoxyboron, tri-iso-propoxyboron, tri-n-propoxyboron, tri-iso-buthoxyboron, tri-n-buthoxyboron, tri-sec-buthoxyboron, tri-t-buthoxyboron, tri-iso-propoxygallium, tetramethoxygermanium, tetraethoxygermanium, tetra-iso-propoxygermanium, tetra-n-propoxygermanium, tetra-iso-buthoxygermanium, tetra-n-buthoxygermanium, tetra-sec-buthoxygernanium and tetra-t-buthoxygermanium; metal halides such as antimony pentachloride, zinc chloride, lithium bromide, tin(IV) chloride, cadmium chloride and boron trifluolide diethyl ether; alkyl aluminium such as trimethylaluminum, triethylaluminum, diethylaluminum chloride, ethylaluminium dichloride and tri-iso-buthylaluminium; derivatives of alkylaluminum such as polymethylaluminoxane and polyisobuthylaluminoxane; alkylzincs such as dimethyl zinc, diethyl zinc and diisopropyl zinc; tertiary amines such as triallyl amine, triethyl amine, tri-n-octyl amine and benzyldimethyl amine; heteropoly acids such as tungstophosphoric acid and molybdophosphoric acid, and alkali metal salt thereof.

Among the above-listed catalysts, zirconium compounds and trialkoxyaluminum are especially preferable. Among the zirconium compounds, tetraalkoxy zirconium and oxyzirconium salts are especially preferable. Among oxyzirconium salts, zirconium 2-ethylhexanoate, zirconyl carbonate and zirconyl hydroxide are especially preferable.

By adopting such zirconium compound, a still-higher molecular weight aliphatic polyester can be produced. The amount of the catalyst is not especially limited, however, it is usually in the range of 0.001 to 10 parts by weight, preferably in the range of 0.01 to 5 parts by weight, and more preferably in the range of 0.1 to 1 part by weight based on a total amount of the cyclic anhydride and cyclic ether. The manner of introducing the catalyst is not especially limited. For example, the catalyst may be added to the cyclic anhydride, or may be added gradually.

Conventionally, it is known that a cyclic anhydride such as succinic anhydride is not polymerized alone. The present inventors have found that by carrying out the ring-opening polymerization of the cyclic anhydride by gradually introducing the cyclic ether in the presence of the catalyst, an aliphatic polyester in which an acid component and an alcohol component are alternately copolymerized in practice can be manufactured in a relatively short period of time.

The ring-opening polymerization may be performed in a solvent or as bulk polymerization. In the case of polymerization in a solvent, the cyclic anhydride is used in solution. In the case of bulk polymerization, the cyclic acid anhydride is used in a molten state. The polymerization in a solvent may be performed in either a batch or a continuous manner.

Examples of the solvent are inert solvents such as benzene, toluene, xylene, cyclohexane, n-hexane, n-octane, dioxane, chloroform and dichloroethane. Only one solvent may be used or two or more may be mixed.

The successive introduction of the cyclic ether is suitably such that the rate per hour is within the range of 3 to 90 parts by weight, preferably 5 to 50 parts by weight, more preferably 14 to 50 parts by weight based on 100 parts by weight of the cyclic anhydride. In the case where the rate per hour is lower than 3 parts by weight, the reaction period becomes long and productivity becomes poor. On the other hand, where the rate is higher than 90 parts by weight, a polyether content in a reaction product increases so that there is obtained only a polyester having a low melting point. In the present invention, the successive introduction of the cyclic ether means not mixing a cyclic ether with a cyclic anhydride all at once and may be either continuous dropwise introduction or intermittent introduction separating the process into multiple steps. It is preferable to perform continuous introduction in such a manner that the amount does not vary much with time.

The mole ratio of the cyclic anhydride to the cyclic ether (cyclic anhydride/cyclic ether) is preferably in the range of 40/60 to 60/40. Since a terminal carboxyl group lowers the properties of the aliphatic polyester the mole ratio is preferably in the range of 40/60 to 49/51 so that the cyclic ether exists in excess. When the ratio is in the above-mentioned range, a content of the terminal carboxylic group is less than 50 percent of all terminal groups of the aliphatic polyester, which raises the weight-loss starting temperature of the aliphatic polyester, thereby improving heat resistance. If the ratio deviates from the above-mentioned range, the amount of an unreacted monomer would increases, resulting in low yield of the aliphatic polyester.

A reaction time is not especially limited, and it should be set according to factors such as a combination of a cyclic anhydride and a cyclic ether, reaction pressure, reaction temperature, the presence or absence of a solvent, the kind of solvent present and the time required for introducing the cyclic ether.

It is preferable to gradually introduce the cyclic ether in a defined amount based on the mole ratio and then perform an ageing reaction by continuing polymerization at the reaction temperature. After the completion of the ageing reaction, the resulting aliphatic polyester can be easily separated from the reaction system.

The present inventors have found that among impurities included in the cyclic acid anhydride and cyclic ether, a material having an active hydrogen such as a free acid, water, alcohol or aldehyde is the main cause of reducing the number-average molecular weight of the aliphatic polyester. Thus, by distilling the starting materials to improve the purity of the cyclic anhydride and the cyclic ether, the aliphatic polyester having a higher number-average molecular weight can be achieved. The purity of the cyclic anhydride and the cyclic ether can be improved by general methods such as distillation, recrystallization and crystallization.

Therefore, in the ring-opening copolymerization of the cyclic acid anhydride and the cyclic ether according to process (b), by setting the purities of the cyclic acid anhydride and the cyclic ether at 99.5 percent by weight or more an aliphatic polyester having a number-average molecular weight of not less than 20,000 is be obtained.

To increase the number-average molecular weight of the aliphatic polyester, it is preferable that the inside of the reaction vessel is completely dried, and an inside atmosphere of the reaction vessel is replaced by a nitrogen gas, and then a ring-opening polymerization is performed in an atmosphere of nitrogen using high purity raw material, catalyst and solvent.

In process (a), an aliphatic polyester having a number-average molecular weight of not less than 10,000 can be formed. The reactor used in the method for producing aliphatic polyester in accordance with the present invention will be described later. If the resulting aliphatic polyester has a number-average molecular weight of less than 10,000, or a still higher molecular wieght is desired, the aliphatic polyester may be further subjected to general ester exchange reaction so as to have a higher number-average molecular weight. Alternatively, such high-molecular aliphatic polyester can be obtained by reacting with a chain-elongating agent of various kinds (cross-linking agent).

Examples of the chain-elongating agent include: isocyanate compounds, epoxy compounds, aziridine compounds, oxazoline compounds, polyvalent metal compounds, polyfunctional acid anhydride, phophoric ester and phosphorous ester. Only one of the above chain-elongating agents may be adopted, or two or more may be mixed. The temperature at which the aliphatic polyester is reacted with the chain-elongating agent is not especially limited. However, the reaction is preferably performed at temperature in the range of 20 °C to 250 °C, more preferably in the range of 100 °C to 200 °C. The method of reacting the aliphatic polyester with the chain-elongating agent is not especially limited. However, examples of such methods include those carried out in solution and those carried out in a melt.

The isocyanate compounds used as chain elongating agents are not especially limited, and any isocyanate compounds having at least two isocyanate groups in a molecule may be used. Examples of such isocyanate compounds include: isocyanate compounds such as tolylene diisocyanate (TDI), 4,4'-diphenylmethane diisocyanate (MDI), hexamethylene diisocyanate, xylylene diisocyanate, methaxylylene diisocyanate, 1,5-naphthalene diisocyanate, hydrogenerated diphenyl methane diisocyanate, hydrogenerated tolylene diisocyanate, xylylene hydride diisocyanate and isophorone diisocyanate; burette polyisocyanate compounds such as sumidule N (available from Sumitomo Bayer Urethane Co., Ltd.); polyisocyanate compounds having an isocyanate ring such as desmodule IL, HL (available from Bayer AG Co., Ltd.) and coronate EH (available from Japan Polyurethane Kogyo Co., Ltd.); adduct polyisocyanate compounds such as sumidule L (available from Sumitomo Bayer Urethane Co., Ltd.) and coronate HL (available from Japan Polyurethane Kogyo Co., Ltd.). In addition, block isocyanate compound may be used. Only one of the above isocyanate compounds may be adopted, or two or more may be mixed.

When performing a urethane reaction between an aliphatic polyester and an isocyanate compound, the ratio of the respective contents is not especially limited. However, it is preferable, for example, a mole ratio of an isocyanate group in the isocyanate compound and a terminal hydroxyl group in the aliphatic polyester (isocyanate group/hydroxyl group) is in the range of 0.5 to 3.0, more preferably in the range of 0.8 to 1.5. To accelerate the urethane reaction, a known urethane catalyst such as an organic tin compound or a tertiary amine, may be used as occasion demands.

The epoxy compounds used as chain elongating agents are not especially limited, and any epoxy compounds having at least two epoxy groups in a molecule may be used. Examples of such epoxy compound include: polyethylene glycol diglycidyl ether, polypropylene glycol diglycidyl ether, polytetramethylene glycol diglycidyl ether, resorcinol diglycidyl ether, neopentyl glycol diglycidyl ether, 1,6-hexanediol diglycidyl ether, diglycidyl adipate, diglycidyl ophthalate, diglycidyl terephthalate, hydroquinone diglycidyl ether, bisphenol S diglycidyl ether, glycerol diglycidyl ether, sorbitol polyglycidyl ether, sorbitan polyglycidyl ethar, polyglycerol polyglycidyl ether, pentaerythritol polyglycidyl ether, diglycerol polyglycidyl ether, triglycidyl tris(2-hydroxyethyl)isocyanurate, glycerol triglycidyl ether and trimethylol propane polyglycidyl ether. Only one of the above epoxy compounds may be adopted, or two or more may be mixed.

A manner of a reaction between an aliphatic polyester and an epoxy compounds is not especially limited. To accelerate the above reaction, a known catalyst, such as tertiary amine, quaternary ammonium salts and imidazole compounds may be used as occasion demands. Alternatively, epoxy compounds may be introduced while aliphatic polyester is being produced. To be more specific, cyclic acid anhydrides, cyclic ether, and epoxy compounds may be reacted by the ring-opening polymerization. Also, the resulting product of the above ring-opening polymerization reaction may be further subject to a reaction with epoxy compounds.

The aziridine compounds are not especially limited. Examples of the aziridine compounds include: 2,2'-bis(hydroxymethyl)butanol-tris[3-(1-aziridinyl)propionate], ethyleneglycol-bis[3-(1-aziridinyl)propionate], polyethyleneglycol-bis[3-(1-aziridinyl)propionate], propyleneglycol-bis(3-(1-aziridinyl)propionate], polypropyleneglycol-bis[3-(1-aziridinyl)propionate], tetramethyleneglycol-bis[3-(1-aziridinyl)propionate], polytetramethyleneglycol-bis[3-(1-aziridinyl)propionate], N,N'-tetramethylenebisethylene urea, N,N'-pentamethylenebisethylene urea, N,N'-hexamethylenebisethylene urea, N,N'-heptamethylenebisethylene urea, N,N'-octamethylenebisethylene urea, N,N'-phenylenebisethylene urea, N'N- toluylenebisethylene urea, N,N'-diphenyl-4,4'-bisethylene urea, 3,3'-dimethyldiphenyl-4,4'-bisethylene urea, 3,3'-dimethoxydiphenyl-4,4'-bisethylene urea and diphenylmethane-p,p-bisethylene urea. Only one of the above compounds may be adopted, or two or more may be mixed. The amount of aziridine compound in the aliphatic polyester is preferably in the range of 0.001 parts by weight to 10 parts by weight, and more preferably, in the range of 0.01 parts by weight to 5 parts by weight.

The oxazoline compounds are not especially limited. Examples of the oxazoline compounds include: 2-oxazoline, 2-methyl-2-oxazoline, 2-ethyl-2-oxazoline, 2-isopropyl-2-oxazoline, 2-butyl-2-oxazoline, 2-phenyl-2-oxazoline, 2,2'-bis(2-oxazoline), 2,2'-methylene-bis(2-oxazoline), 2,2'-ethylene-bis(2-oxazoline), 2,2'-trimethylene-bis(2-oxazoline),2,2'-tetramethylene-bis-(2-oxazoline), 2,2'-hexametylene-bis(2-oxazoline), 2,2'-octamethylene-bis(2-oxazoline),2,2'-ethylene-bis(4,4'-dimethyl-2-oxazoline), 2,2'-p-phenylene-bis(2-oxazoline), 2,2'-m-phenylene-bis-(2-oxazoline), 2,2'-m-phenylene-bis-(4,4'-dimethyl-2-oxazoline), bis-(2-oxazolinylcyclohexane) sulfide and bis-(2-oxazolinylnorbornane) sulfide. Only one of the above compounds may be adopted, or two or more may be mixed. Among the above-listed oxazoline compounds, 2,2'-m-phenylene-bis-(2-oxazoline) and bis-(2-oxazolinylnorbornane) sulfide are especially preferable.

The ratio between the aliphatic polyester and oxazoline compound is not especially limited. However, for example, the mole ratio of 2-oxazoline group in the oxazoline compound to a terminal carboxyl group in the aliphatic polyester (i.e., 2-oxazoline group/carboxyl group) is preferably in the range of 0.5 to 10.0, and more preferably in the range of 0 . 8 to 5.0. To accelerate the reaction, a known catalyst, such as amine salts of acidic compounds may be used as occasion demands.

The polyvalent metal compounds used as chain elongating agents are not specifically limited. Examples of the polyvalent metal compounds include: organometallic compounds, metal salts and metal alkoxides having at least two valences. Preferable metals for the organometallic compounds or metal salts are, for example, zinc, calcium, copper, iron, magnesium, cobalt and barium. More preferable for the organometallic compounds and metal salts are zinc(II) acetylacetonate, zinc acetate, zinc formate, zinc propionate and zinc carbonate in which counter anions of the polyvalent metal compounds can be separated and recovered as volatile components from a reaction system by neutralization after reacting with the aliphatic polyester. Examples of the metal alkoxides include: alminium isopropoxide, mono-sec-butoxyaluminium diisopropoxide, aluminium ethyoxide, tetraisopropoxytitanium, tetra-n-butoxytitanium, tetra(2-ethylhexyloxy)titanium, and tetrastearyloxytitanium. Only one of the above compounds may be adopted, or two or more may be mixed.

The ratio between aliphatic polyester and polyvalent metal compound is not especially limited. However, where the polyvalent metal compounds are either organometallic compounds or metal salts (hereinafter referred to as organometallic compound and the like) , the mole ratio of the organometallic compound and the like to terminal carboxyl group aliphatic polyester (i.e., organometallic compounds/carboxyl group) is preferably in the range of 0.1 to 2.0, and more preferably in the range of 0.2 to 1.2. Where a reaction between the hydroxyl group at the terminal of the aliphatic polyester and the metal alkoxide, for example, the mole ratio of the organometallic compounds and the like to the hydroxyl group at the terminal of the aliphatic polyester (i.e., metal compounds/hydroxyl group) is preferably in the range of 0.1 to 2.0, and more preferably in tha range of 0.2 to 1.2.

The polyfunctional acid anhydrides are not especially limited. Only one polyfunctional acid anhydride may be adopted, or two or more may be mixed. An amount of the polyfunctional anhydrides in the aliphatic polyester is preferably in the range of 0.001 parts by weight to 10 parts by weight, and more preferably, in the range of 0.01 parts by weight to 5 parts by weight.

The reaction between the aliphatic polyester and polyfunctional acid anhydrides is not especially limited. The polyfunctional acid anhydrides may be introduced while the aliphatic polyester is being produced. To be more specific, cyclic acid anhydrides, cyclic ether, and polyfunctional acid anhydrides may be reacted through the ring-opening polymerization.

Also, the resulting product of the above ring-opening polymerization may be further subject to a reaction with a polyfunctional acid anhydride.

The phosphoric ester and phosphorous ester may be either diester or triester. Examples of the ester group include methyl, ethyl, propyl, butyl, phenyl and 2-ethylhexyl groups. Among the above-listed ester groups, methyl, ethyl and phenyl groups are especially preferable taking reactivity and cost performance, into consideration. Only one of the phosphoric ester and phosphorous ester may be adopted, or two or more may be mixed. The content of the phosphoric acid ester and phosphorous acid ester in the aliphatic polyester is preferably in the range of 0.001 parts by weight to 10 parts by weight, and more preferably, in the range of 0.01 parts by weight to 5 parts by weight.

An aliphatic polyester produced in accordance with the present invention has a number-average molecular weight (Mn) in the range of 10,000 to 100, 000 . In view of heat resistance and mechanical strength, the number-average molecular weight of the aliphatic polymer is preferably not less than 25,000, more preferably, not less than 40,000. In the case where the number-average molecular weight is less than 10,000, when molding into, for example, a film, problems would arise in that the aliphatic polyester is frangible or cannot be stretched. The aliphatic polyester having a number-average molecular weight of less than 10,000 can be polymerized by a reaction with a chain-elongating agent (crosslinking agent). However, this increases a number of steps required in the reaction process. Moreover, the crosslinking agent used in the reaction may cause fish eyes on a product. Thus, an aliphatic polyester having a number-average molecular weight of less than 10,000 is industrially unpreferable. On the other hand, when an aliphatic polyester has a number-average molecular weight of more than 100,000, a long time is required for the reaction, thus such aliphatic polyester is industrially unpreferable. When a long time is required for the reaction, a volatile component generated by decomposition of the aliphatic polyester would increase. For this reason, the number-average molecular weight is preferably not more than 80,000, more preferably not more than 70,000. Consequently, the number-average molecular weight of the aliphatic polyester preferably falls in the range of 25,000 to 80,000, more preferably in the range of 40,000 to 70,000.

The reaction vessel is not especially limited as long as polymerization resulting from ring-opening can be performed so as to produce a viscosity of 1 to 1,000 Pas (10 to 10,000 poise), preferably 10 to 5,000 Pas (100 to 50,000 poise) after 0.1 - 30 hours from the start of the reaction at a temperature in the range of 180 to 280 °C, more preferably in the range of 235 to 280 °C, and reaction pressure in the range of 0.3 mmHg to 3.0 mmHg. However, the reaction vessel preferably permits ring-opening polymerization to be performed so as to acheive a viscosity of 1 to 1000 Pas (10 to 10,000 poise), preferably 10 to 5000 Pas (100 to 50,000 poise) after 0.5 - 10 hours. For such reaction vessel, conventional reaction vessels such as longitudinal, lateral and high viscosity reaction vessels may be used.

By stirring the raw materials so as to satisfy the above conditions, the free surface of the contents is altered frequently. The total surface per unit time with respect to the volume can be increased rapidly, resulting in a large liquid-air contact face. As a result, volatile components generated as the polymerization progresses can be easily separated.

For example, in the case of adopting a flask or a reaction furnace provided with a general agitator as a longitudinal reaction vessel, the conditions can be satisfied by slightly reducing the content in the reaction vessel. In addition, by adopting a reaction furnace provided with a helical ribbon blade or helical deformed baffle as an agitator, the raw materials can be stirred with still improved efficiency. Furthermore, by adopting a lateral single screw mixer provided with a continuous deformed blade, or lateral reactor having two parallel stirring axes, the raw materials can be stirred with still improved efficiency.

In the present invention, high viscosity reaction vessel of either batch type or continuous type may be used. Examples of the batch-type reaction vessel include: inverted conical ribbon blade-type reactor (available from Mitsubishi Heavy Industries, Ltd.) and a twist gate blade-type reactor (available from Hitachi, Ltd.). Examples of continuous type reactors include: Hitachi spectacle blade polymerizer (available from Hitachi, Ltd.), Hitachi gate blade polymerizer (available from Hitachi, Ltd.), a self-cleaning type reactor (available from Mitsubishi Heavy Industries, Ltd.), a lateral twin screw-type reactor (available from Mitsubishi Heavy Industries, Ltd.), a KRC kneader (available from Kurimoto Tekkosho Co., Ltd.,), TEX-K (available from The Japan Steel Works, Ltd.), a single screw extruder, a twin screw extruder for use in an extrusion molding or deaerating process.

The available reaction vessel is not limited to the above-listed examples. In addition, the reaction vessel may be suitably adopted for a reaction between the aliphatic polyester and the chain-elongating agent.

Additives such as a crystallizing agent, dye, pigment, heat resisting agent, anti-oxidant, weather resisting agent, smoothing agent, anti-static agent, stabilizer, filler, reinforcement material, flame resisting agent, and plasticizer, or other polymers can be added to the aliphatic polyester as occasion demands to such an extent that does not impair the effect of the present invention. The other polymers may be, but not limited to, polyolefins such as polyethylene and aromatic polyesters.

The aliphatic polyester produced in accordance with the present invention is biodegradable and moldable. The aliphatic polyester can be molded by conventional molding method such as extrusion molding, injection molding, cast molding and vacuum molding and can be readily processed into molded articles including various components, containers, materials and instruments and fibers, films and sheets.

The following Examples illustrate the invention. In the Examples and Comparative Examples, "part(s)" denotes "part(s) by weight".

The number-average molecular weights, the melting points and the purity of the raw materials were measured, and the decomposition tests were performed in the following manner.

### Number-Average Molecular Weight

The number-average molecular weight (Mn) of the aliphatic polyester was measured using gel permeation chromatography under the following conditions. The number-average molecular weight referred herein was calculated as standard polystyrene.

### Conditions of Measurements

reactor: HLC-8020 (available from Tosho Co., Ltd.)
column: Shodex K-805, 804, 803, 802 (available from Showa Denko K.K)
elute: chloroform
quantity of flow: 1 ml/min.
temperature: 40 °C
detector: RI

### Melting Point

The melting point Tm (°C) of the aliphatic polyester was measured in an atmosphere of nitrogen by a DSC instrument (Seiko Electronics Industry, Co, Ltd. Model: SSC5200). The measurement was carried out in the following manner. 20 mg of sample was completely melted by heating, and then the sample was reverted rapidly to - 50 °C. Thereafter, the sample was heated at a temperature elevation rate of 6° K/minute. Then, the endothermic peak was measured. The obtained temperature was determined as a melting point Tm.

### Biodegradability

First, a polyester resin composition was molded into a 200 µm thick film using a compression molding machine under the following conditions: molding temperature of 130°C, a molding pressure of 150 kg/cm², and a molding period of two minutes. Next, the resulting film was buried in a planter in which soil was placed and preserved for 100 consecutive days in a thermohumidstat of 23 °C and relative humidity 65 percent while a defined amount of water was sprinkled on the planter once a day. Thereafter, a change of outside appearance of the film was observed. Here, as the soil, there was used a mixture of soil sampled in Onohara, Minoo-shi, Japan, soil sampled in Nishi-Otabi-cho, Suita-shi, Japan, and leaf mold in the ratio of 3:1:3.

### Purity

### Purity of succinic anhydride

The succinic acid contained in the succinic anhydride as impurity was determined by measuring ¹H-NMR. Then, the purity (percent by weight) of succinic anhydride was determined by subtracting the succinic acid from the total amount of succinic anhydride.

### Purity of ethylene oxide

Free acid, water and aldehyde contained in ethylene oxide as impurities were determined. The free acid and aldehyde were determined by measuring them in accordance with JIS K 1526. Water was determined by using Karl Fischer's device. Then, the purity of ethylene oxide (percent by weight) was determined by subtracting the free acid, water and aldehyde from the total amount of ethylene oxide.

### Example 1

Into an autoclave provided with a thermometer, an agitator, and a nitrogen tube were placed 500.0 parts of succinic anhydride (cyclic anhydride) and 3.68 parts of zirconium 2-ethylhexanoate (zirconium compound) as a catalyst. The atmosphere in the autoclave was replaced by the nitrogen. Then, the temperature of the autoclave was gradually elevated to 130 °C with stirring to dissolve the succinic anhydride. While maintaining a temperature of the autoclave at 130 °C and the pressure at 4.0 kgf/cm² to 8.5 kgf/cm², 231.1 parts of ethylene oxide (cyclic ether) was gradually introduced for 4.0 hours at the rate of 58 parts per hour. After the completion of the introduction of ethylene oxide, an ageing reaction was performed at 130 °C for 1 hour and then the temperature of a system was reverted to normal temperature, thereby obtaining a high-polymer product.

The resulting polymerized product was dissolved in a defined amount of chloroform and precipitated in a defined amount of tetrahydrofuran for purification, was thrice repeated to obtain an aliphatic polyester at a yield of 99.2 percent.

The resulting aliphatic polyester had a number-average molecular weight of 13,000 and a melting point of 104.4 °C. The carboxyl group content of the polyester was determined by neutralization titration to be 0.0420 mmol/g. The results of the measurements of this example show that a ratio of the carboxyl group to terminal ends of the aliphatic polyester was 27.3 percent.

Into a self-cleaning type twin screw mixer (S1 KRC reactor made by Kurimoto Tekkosho Co., Ltd., inner diameter 25 mm, L/D = 10.2), were placed 70.0 parts of the aliphatic polyester, and 0.700 parts of diphenyl phosphite (chain-elongating agent). A reaction was performed in a nitrogen gas current for 1.5 hours under 0.15 mmHg - 0.2 mmHg, jacket temperature 240°C, and mixing rate 100 rpm, thereby obtaining a polyester resin composition.

The resulting polyester resin composition had a number-average molecular weight of 50,000, and a melting point of 104.2 °C. The polyester resin composition was biodegradable. The results of measurements and experiments of this example are shown in Table 1. In Table 1 under column "biodegradability", the results were described as follows.
(+): A change of outside appearance was recognized.
(-): A change of outside appearance was not recognized.

### Example 2 (Referential)

Into an autoclave provided with a thermometer, an agitator, and a nitrogen tube, were placed 500.0 parts of succinic anhydride (cyclic anhydride) and 3.70 parts of tetra-t-buthoxyzirconium (zirconium compound) as a catalyst. The atmosphere in the autoclave was replaced by nitrogen. Then, the temperature of the autoclave was gradually elevated to 130 °C with stirring to dissolve the succinic anhydride. While maintaining a temperature of the autoclave at 130°C and the pressure at 4.0 kgf/cm² to 8.4 kgf/cm², 231.5 parts of ethylene oxide (cyclic ether) was successively gradually introduced for 4.0 hours at the rate of 58 parts per hour. After the completion of the introduction of ethylene oxide, an ageing reaction was performed at 130 °C for 1 hour and then the temperature of a system was reverted to normal temperature, thereby obtaining a polymerized product.

The same purification process as Example 1 was performed thereby obtaining an aliphatic polyester at a yield of 99.5 percent.

The resulting aliphatic polyester had a number-average molecular weight of 15,000 and a melting point of 103.9 °C. The carboxyl group content of the polyester was determined by neutralization titration to be 0.0330 mmol/g. The results of the measurements of this example show that a ratio of the carboxyl group to terminal ends of the aliphatic polyester was 24.8 percent.

Into the same mixer as Example 1, were placed 70. 0 parts of the aliphatic polyester, and 0.700 parts of diphenyl phosphite. A reaction was performed in a nitrogen gas current for 1.75 hours under 0.15 mmHg - 0.2 mmHg, jacket temperature 240°C, and mixing rate 100 rpm, thereby obtaining a polyester resin composition. The total time required for the reaction was 6.75 hours.

The resulting polyester resin composition, had a number-average molecular weight of 52,000, and a melting point of 103.5 °C. The polyester resin composition was biodegradable. The results of measurements and experiments of this example are shown in Table 1.

### Example 3

The same reaction as Example 1 was performed and an aliphatic resin composition was obtained.

Into the same mixer as used in Example 1 was placed 70.0 parts of aliphatic polyester. A reaction was performed in a nitrogen gas current for 0.83 hours under 0.15 mmHg - 0.2 mmHg, reaction temperature 270 °C, and mixing rate 100 rpm, thereby obtaining a polymerized aliphatic polyester. The total time required for the reaction was 5.83 hours. The resulting aliphatic polyester had a number-average molecular weight of 51,000 and a melting point of 104.0 °C. In addition, the aliphatic polyester was biodegradable. The results of measurements and experiments of this example are shown in Table 1.

### Example 4

Into an autoclave provided with a thermometer, an agitator, and a nitrogen tube were placed 500.0 parts of succinic anhydride and 3.68 parts of zirconium 2-ethylhexanoate. The atmosphere in the autoclave was replaced by nitrogen. Then, the temperature of the autoclave was gradually elevated to 130 °C with stirring to dissolve the succinic anhydride. While maintaining the temperature of the autoclave at 130°C and the pressure at 4.0 kgf/cm² to 8.0 kgf/cm², a mixture of 231.0 parts of ethylene oxide (cyclic ether) and 2.58 parts of diglycidyl adipate (denacohol EX-701 avairable from Nagase Kasei Co., Ltd.) was gradually introduced for 4.0 hours at the rate of 58 parts per hour. After the completion of the introduction of ethylene oxide, an ageing reaction was performed at 130 °C for 1 hour and then the temperature of a system was reverted to normal temperature, thereby obtaining a high-molecular product.

The same rectification process as Example 1 was performed thereby obtaining an aliphatic polyester at a yield of 99.2 percent.

The resulting aliphatic polyester had a number-average molecular weight of 14,000 and a melting point of 104.6 °C. The carboxyl group content of the polyester was determined by neutralization titration to be 0.0350 mmol/g. The results of the measurements of this example show that a ratio of the carboxyl group to terminal ends of the aliphatic polyester was 24.5 percent.

Into the same mixer as Example 1 were placed 70.0 parts of the aliphatic polyester, and 0.700 parts of diphenyl phosphite. A reaction was performed in a nitrogen gas current for 1.75 hours under 0.15 mmHg - 0.2 mmHg, reaction temperature 240°C, and mixing rate 100 rpm, thereby obtaining a high-molecular aliphatic polyester. The total time required for the reaction was 6.75 hours.

The resulting high-molecular polyester resin composition had a number-average molecular weight of 55,000, and a melting point of 104.1 °C. The polyester resin composition was biodegradable. The results of measurements and experiments of this example are shown in Table 1.

### Example 5

The same reaction as Example 1 was performed and an aliphatic resin composition was obtained. Into the same mixer as used in Example 1, was placed 70.0 parts of the aliphatic polyester. A reaction was performed in a nitrogen gas current for 4.0 hours under conditions of normal pressure, reaction temperature 270 °C, and mixing rate 100 rpm, thereby obtaining an aliphatic polyester. The total time required for the reaction was 9.0 hours.

The resulting aliphatic polyester had a number-average molecular weight of 47,000 and a melting point of 103.1 °C. In addition, the aliphatic polyester was biodegradable. The results of measurements and experiments of this example are shown in Table 1.

### Example 6

The same reaction as Example 1 was performed and an aliphatic resin composition was obtained. Into the same mixer as used in Example 1, was placed 70.0 parts of the aliphatic polyester. A reaction was performed in a nitrogen gas current for 5.0 hours under conditions of vacuum 0.15 mmHg - 0.2 mmHg, reaction temperature 190 °C, and mixing rate 100 rpm, thereby obtaining a high-polymer aliphatic polyester. The total time required for the reaction was 10.0 hours.

The resulting aliphatic polyester had a number-average molecular weight of 50,000 and a melting point of 103.4 °C. In addition, the aliphatic polyester was biodegradable. The results of measurements and experiments of this example are shown in Table 1.

### Example 7 (Referential)

Into an autoclave provided with a thermometer, an agitator, a nitrogen tube, and a flow dividing condenser were placed 300.0 parts of succinic anhydride (polybasic acid), 195.0 parts of ethylene glycol (aliphatic glycol) and 0.54 parts of tetra-iso-propoxytitan as a catalyst. The atmosphere in the autoclave was replaced by nitrogen. Then, the mixture in the flask was subjected to reaction with stirring for 6.5 hours at temperature in a range of 150 °C to 220 °C, and subjected to further reaction at temperature in a range of 70 °C to 210 °C for 16 hours and vacuum in a range of 0.1 mmHg to 10 mmHg, thereby obtaining an aliphatic polyester. The resulting aliphatic polyester had a number-average molecular weight of 13, 300.

Into the same mixer as Example 1 was placed 70.0 parts of the aliphatic polyester. A reaction was performed in a nitrogen gas current for 5.0 hours under conditions of vacuum 0.1 mmHg - 0.2 mmHg, reaction temperature 240°C, and mixing rate 100 rpm, thereby obtaining a polyester resin composition. The total time required for the reaction was 27.5 hours.

The resulting aliphatic polyester, i.e., a high-molecular aliphatic polyester had a number-average molecular weight of 53,000, and a melting point of 105.1 °C. The polyester resin composition was biodegradable. The results of measurements and experiments of this example are shown in Table 1.

### Example 8

The same reaction as Example 1 was performed and an aliphatic resin composition was obtained. Into the same mixer as used in Example 1, was placed 70.0 parts of the aliphatic polyester. A reaction was performed in a nitrogen gas current for 5.0 hours under conditions of normal pressure, reaction temperature 220 °C, and mixing rate 100 rpm, thereby obtaining a high-molecular aliphatic polyester. The total time required for the reaction was 10.0 hours.

The resulting aliphatic polyester had a number-average molecular weight of 21,000 and a melting point of 103.7 °C. In addition, the aliphatic polyester was biodegradable. The results of measurements and experiments of this example are shown in Table 1.

### Example 9

The same reaction as Example 1 was performed and an aliphatic resin composition was obtained. Into the same mixer as used in Example 1, was placed 70.0 parts of the aliphatic polyester. A reaction was performed in a nitrogen gas current for 5.0 hours under conditions of vacuum 0.15 mmHg - 0.2 mmHg, reaction temperature 160 °C, and mixing rate 100 rpm, thereby obtaining a high-polymer aliphatic polyester. The total time required for the reaction was 10.0 hours.

The resulting aliphatic polyester had a number-average molecular weight of 20,000 and a melting point of 102.9 °C In addition, the aliphatic polyester was biodegradable. The results of measurements and experiments of this example are shown in Table 1.

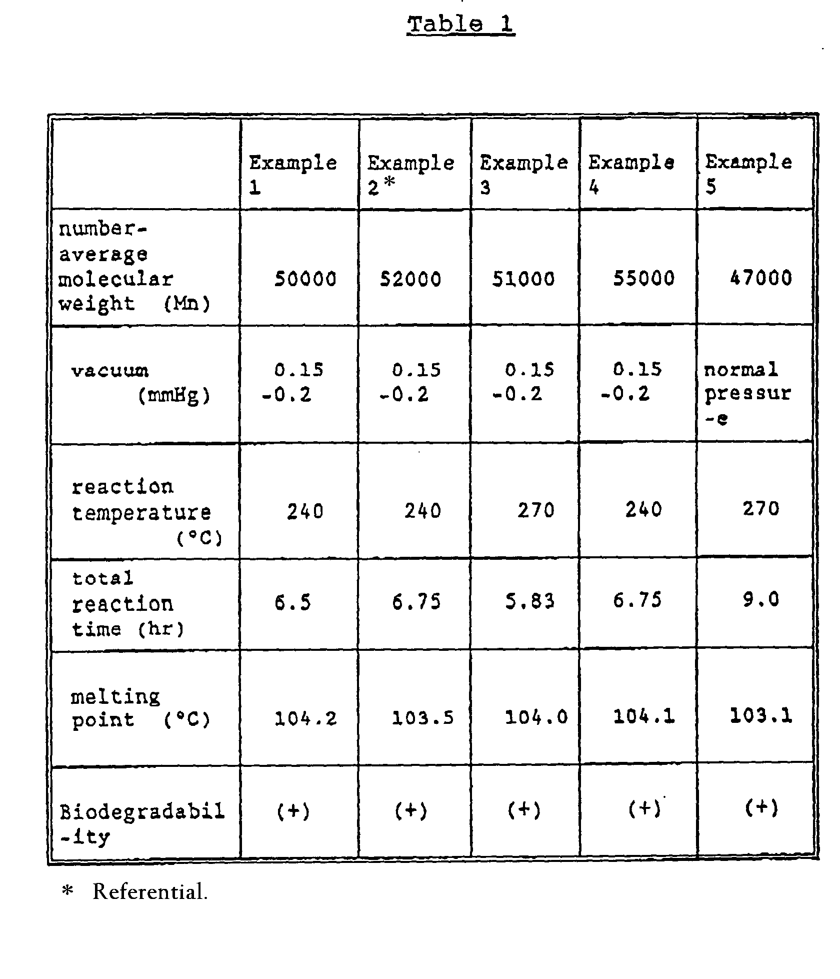

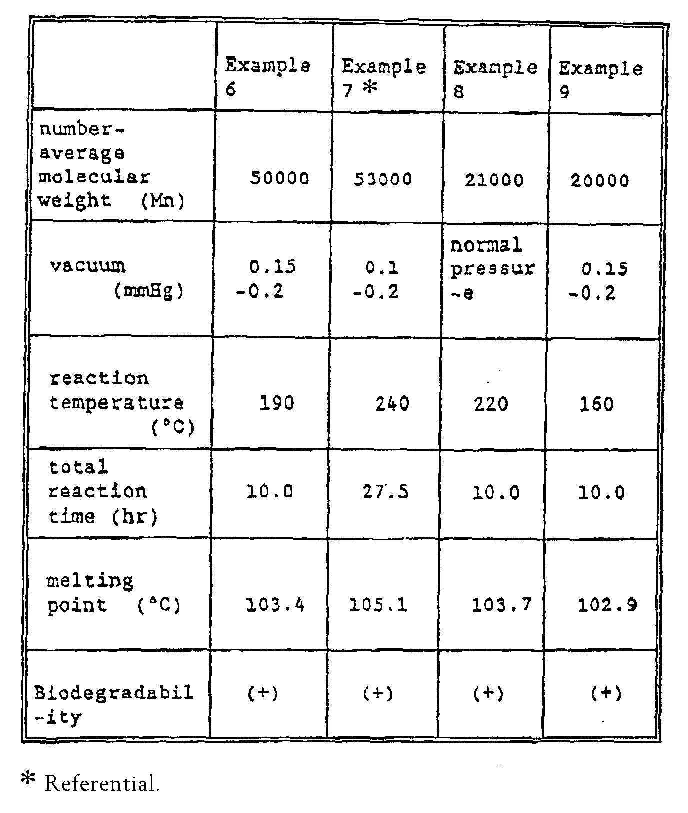

### Example 10

A one-litter autoclave provided with a thermometer, an agitator, and a nitrogen tube was prepared. The atmosphere in the autoclave was replaced by nitrogen to fully dry the inside of the autoclave. Into the autoclave were placed 386.0 parts of succinic anhydride (available from Lonza Ltd.,) and 2.31 parts of zirconium 2-ethylhexanoate (available from Daiichi kigenso Kagaku Kogyo Ltd.,) as a catalyst. The atmosphere in the autoclave was replaced by nitrogen.

The purity of the succinic anhydride was 99.8 percent by weight. After performing dehydrizing and drying process of zirconium 2-ethylhexanoate using calcium hydride, filtration was performed.

The content of a free acid (impurites) included in the zirconium 2-ethylhexanoate was not more than 0.008 mole percent with respect to succinic anhydride. The content of water (impurities) was not more than 0.02 mole percent with respect to succinic anhydride.

Then, the temperature of the autoclave was gradually elevated to 130 °C with stirring to dissolve the succinic anhydride. While maintaining the temperature of the autoclave at 130°C and the pressure in the range of 4.2 kgf/cm² to 7.5 kgf/cm², 179.85 parts of ethylene oxide (available from Nippon Shokubai Co., Ltd.) was gradually introduced over 6.5 hours at the rate of 27.7 parts per hour. After the completion of the introduction of ethylene oxide, an ageing reaction (ring-opening copolymerization) was performed at 130 °C for 1.0 hour and then the temperature of a system was reverted to normal temperature, thereby obtaining an aliphatic polyester.

The succinic anhydride remaining in the aliphatic polyester was determined by measuring ¹H-NMR. As a result, the aliphatic polyester had a yield of 99.8 percent, a number-average molecular weight of 37,800 and a melting point of 101.3 °C. The results of measurements in this example are shown in Table 2.

### Example 11

A one-litre autoclave provided with a thermometer, an agitator, and a nitrogen tube was prepared. The atmosphere in the autoclave was replaced by nitrogen to fully dry the inside of the autoclave. Into the autoclave were placed 300.0 parts of succinic anhydride (available from Lonza Ltd.,), 1.45 parts of zirconium 2-ethylhexanoate (available from Daiichi Kigenso Kagaku Kogyo Co. Ltd.,) and 30 parts of cyclohexane as a solvent. The atmosphere in the autoclave was replaced by nitrogen.

The purity of the succinic anhydride was 99.8 percent by weight. After performing dehydrizing and drying process of zirconium 2-ethylhexanoate using calcium hydride, filtration was performed.

The content of a free acid (impurities) included in the zirconium 2-ethylhexanoate was not more than 0.008 mole percent with respect to succinic anhydride. The content of water (impurities) was not more than 0.02 mole percent with respect to succinic anhydride. After performing the dehydrizing and drying process of cyclohexane using molecular sieves (synthetic zeolite) and a filtration was performed.

Then, the temperature of the autoclave was gradually elevated to 130 °C with stirring to dissolve the succinic anhydride. While maintaining the temperature of the autoclave at 130°C and the pressure in a range of 4.3 kgf/cm² to 8.1 kgf/cm², 145.36 parts of ethylene oxide (available from Nippon Shokubai Co., Ltd.) was gradually introduced over 6.5 hours at the rate of 22.36 parts per hour. After the completion of the introduction of ethylene oxide, an ageing reaction (ring-opening copolymerization) was performed at 130 °C for 1.5 hours and then a temperature of a system was reverted to normal temperature, thereby obtaining an aliphatic polyester.

The succinic anhydride remaining in the aliphatic polyester was determined by measuring ¹H-NMR. As a result, the aliphatic polyester had a yield of 99.9 percent, a number-average molecular weight of 42,300 and a melting point of 104.2 °C. The results of measurements in this example are shown in Table 2.

### Example 12.

A reaction was performed in the same autoclave as that used in Example 10. First, the atmosphere in the autoclave was replaced by nitrogen to fully dry the inside of the autoclave. Into the autoclave were placed 300.0 parts of succinic anhydride (available from Lonza Ltd.,), and 1.643 parts of zirconocene dichloride (zirconium compound) (available from Tokyo Chemical Industries Co. Ltd.,) as a catalyst. Then, the atmosphere in the autoclave was replaced by nitrogen.

The purity of the succinic anhydride was 99.8 percent by weight. The purity of zirconocene dichloride was not less than 97 percent by weight.

Then, the temperature of the autoclave was gradually elevated to 130 °C with stirring to dissolve the succinic anhydride. While maintaining the temperature of the autoclave at 130°C and the pressure in a range of 4.1 kgf/cm² to 8.1 kgf/cm², 158.6 parts of ethylene oxide (available from Nippon Shokubai Co., Ltd.) was gradually introduced over 10.0 hours at the rate of 15.9 parts per hour. After the completion of the introduction of ethylene oxide, an ageing reaction (ring-opening copolymerization) was performed at 130 °C for 1.5 hour and then the temperature of a system was reverted to normal temperature, thereby obtaining an aliphatic polyester.

The succinic anhydride remaining in the aliphatic polyester was determined by measuring ¹H-NMR. As a result, the aliphatic polyester had a yield of 99.4 percent, a number-average molecular weight of 28,000 and a melting point of 94.4 °C. The results of measurements are shown in Table 2.

Next, the effect of the respective purities of the succinic anhydride and the ethylene oxide on the number-average molecular weight was examined. Accordingly, the following comparative examples 1 and 2 are provided in comparison with Examples 10 - 12.

### Comparative Example 1

A reaction was performed using the same autoclave as that used in Example 10. First, the atmosphere was replaced by nitrogen to fully dry the inside of the autoclave. Into the autoclave were placed 500.0 parts of succinic anhydride (available from WAKO Pure Chemical Industries Ltd.) and 2.99 parts of zirconium 2-ethylhexancate (available from Daiichi Kigenso Kagaku Kogyo Co. Ltd.,). The atmosphere in the autoclave was replaced by nitrogen.

The purity of the succinic anhydride was 98.8 percent by weight. After performing dehydrizing and drying process of zirconium 2-ethylhexanoate using hydrogenerated calcium, filtration was performed.

The content of a free acid (impurities) included in the zirconium 2-ethylhexanoate was not more than 0.008 mole percent with respect to succinic anhydride. The content of water (impurities) was 0.02 mole percent based on succinic anhydride.

Then, the temperature of the autoclave was gradually elevated to 130 °C with stirring to dissolve the succinic anhydride. While maintaining the temperature of the autoclave at 130°C and the pressure in a range of 4.0 kgf/cm² to 8.5 kgf/cm², 231.1 parts of ethylene oxide (available from Nippon Shokubai Co., Ltd.) was gradually introduced over 4.0 hours at the rate of 58 parts per hour. The purity of ethylene oxide was not less than 99.9 percent by weight. After the completion of the introduction of ethylene oxide, an ageing reaction (ring-opening copolymerization) was performed at 130 °C for 1 hour and then the temperature of a system was reverted to normal temperature, thereby obtaining a high-polymer product, i.e., a comparative aliphatic polyester.

The succinic anhydride remaining in the comparative aliphatic polyester was determined by measuring ¹H-NMR. As a result, the aliphatic polyester has a yield of 99.5 percent, a number-average molecular weight of 14,500 and a melting point of 103.2 °C. The results of the measurements of this comparative example are shown in Table 2.

### Comparative Example 2

In place of 179.85 parts of ethylene oxide (available from Nippon Shokubai Col., Ltd. with purity of not less than 99.9 weight percent), 179.85 parts of coarse ethylene oxide (purity 98.0 weight percent) was used. Other than that, the same reaction as Example 10 was performed in the same manner, and a comparative aliphatic polyester was obtained.

The succinic anhydride remaining in the comparative aliphatic polyester was determined by measuring ¹H-NMR. As a result, the aliphatic polyester had a yield of 99.8 percent, a number-average molecular weight of 11,000 and a melting point of 102.9 °C. The results of the measurements of this comparative example are shown in Table 2.

**Table 2**

| | Example 10 | Example 11 | Example 12 | Comparati ve Example 1 | Comparati ve Example 2 |
|---|---|---|---|---|---|
| purity of succinic anhydride (percent by weight) | 99.8 | 99.8 | 99.8 | 98.8 | 99.8 |
| purity of ethylene oxide (percent by weight) | 99.9 or above | 99.9 or above | 99.9 or above | 99.9 or above | 98.0 |
| number-average molecular weight (Mn) | 37800 | 42300 | 28000 | 14500 | 11000 |
| melting point (°C) | 101.3 | 104.2 | 94.4 | 103.2 | 102.9 |

## Claims

1. A process for producing an aliphatic polyester comprising ring-opening polymerisation of a cyclic acid anhydride with a cyclic ether in the presence of at least one zirconium compound catalyst selected from zirconium 2-ethylhexanoate, zirconium carbonate and zirconium hydroxide.

2. A process for producing an aliphatic polyester comprising ring-opening polymerisation of a cyclic acid anhydride having a purity of not less than 99.5% with a cyclic ether having a purity of not less than 99.5%.

3. A process according to claim 2, wherein the resulting aliphatic polyester has a number average molecular weight not less than 20,000.

4. A process according to claim 2 or claim 3, which is carried out in the presence of a catalyst.

5. A process according to claim 4, wherein the catalyst is a zirconium compound.

6. A process according to claim 5, wherein the catalyst is an alkoxyzirconium or an oxyzirconium salt.

7. A process according to claim 4, wherein the catalyst is a trialkoxyaluminum.

8. A process according to any one of claims 1 and 3 to 7, wherein the catalyst is used in an amount of 0.001 to 10% by weight based on the cyclic acid. anhydride and the cyclic ether.

9. A process according to any one of claims 1 to 8, wherein the cyclic acid anhydride and the cyclic ether are used in a mole ratio of cyclic acid anhydride to cyclic ether of 40/60 to 60/40.

10. A process according to any one of claims 1 to 9, wherein the cyclic acid anhydride includes at least one acid anhydride group in the molecule.

11. A process according to any one of claims 1 to 10, wherein the cyclic acid anhydride includes succinic anhydride.

12. A process according to any one of claims 1 to 11, wherein the cyclic ether includes an epoxy group in the molecule.

13. A process according to any one of claims 1 to 12, wherein the cyclic ether includes ethylene oxide.

14. A process according to any one of claims 1 to 13, which comprises gradually introducing the cyclic ether into the reaction system.

15. A process according to claim 14, wherein the cyclic ether is introduced at a rate of 3 to 90 parts by weight per hour per 100 parts by weight of the cyclic acid anhydride.

16. A process according to any one of claims 1 to 15, which comprises gradually introducing the catalyst into the reaction system.

17. A process according to any one of claims 1 to 16, which is carried out in a presence of a solvent.

18. A process according to any one of claims 1 to 17, which is carried out at a temperature of 10 to 250°C.

19. A process according to any one of claims 1 to 18, which is carried out under a pressure from ambient to 5 MPa.

20. A process according to any one of claims 1 to 19, comprising the further step of subjecting the aliphatic polyester to a reaction with a crosslinking agent.

## Patentansprüche

1. Verfahren zur Herstellung eines aliphatischen Polyesters, das eine ringöffnende Polymerisation eines zyklischen Säureanhydrids mit einem zyklischen Ether in Gegenwart wenigstens eines Katalysators aus einer Zirkonverbindung, der aus Zirkon-2-Ethylhexanoat, Zirkoncarbonat und Zirkonhydroxid ausgewählt ist, umfasst.

2. Verfahren zur Herstellung eines aliphatischen Polyesters, das eine ringöffnende Polymerisation eines zyklischen Säureanhydrids mit einer Reinheit von nicht weniger 99,5 % mit einem zyklischen Ether mit einer Reinheit von nicht weniger als 99,5 % umfasst.

3. Verfahren nach Anspruch 2, bei dem der resultierende aliphatische Polyester ein Molekulargewicht im Zahlenmittel von nicht weniger als 20000 hat.

4. Verfahren nach Anspruch 2 oder Anspruch 3, das in Gegenwart eines Katalysators ausgeführt wird.

5. Verfahren nach Anspruch 4, bei dem der Katalysator eine Zirkonverbindung ist.

6. Verfahren nach Anspruch 5, bei dem der Katalysator ein Alkoxyzirkon oder ein Oxyzirkonsalz ist.

7. Verfahren nach Anspruch 4, bei dem der Katalysator ein Trialkoxyaluminium ist.

8. Verfahren nach einem der Ansprüche 1 und 3 bis 7, bei dem der Katalysator in einer Menge von 0,001 bis 10 Gew.-% bezogen auf die zyklische Säure verwendet wird.

9. Verfahren nach einem der Ansprüche 1 bis 8, bei dem das zyklische Säureanhydrid und der zyklische Ether in einem Molverhältnis des zyklischen Säureanhydrids zum zyklischen Ether von 40/60 bis 60/40 verwendet werden.

10. Verfahren nach einem der Ansprüche 1 bis 9, bei dem das zyklische Säureanhydrid wenigstens eine Säureanhydrid-Gruppe im Molekül enthält.

11. Verfahren nach einem der Ansprüche 1 bis 10, bei dem das zyklische Säureanhydrid Succinanhydrid enthält.

12. Verfahren nach einem der Ansprüche 1 bis 11, bei dem der zyklische Ether eine Epoxidgruppe im Molekül enthält.

13. Verfahren nach einem der Ansprüche 1 bis 12, bei dem der zyklische Ether Ethylenoxid enthält.

14. Verfahren nach einem der Ansprüche 1 bis 13, das das allmähliche Einleiten des zyklischen Ethers in das Reaktionssystem umfasst.

15. Verfahren nach Anspruch 14, bei dem der zyklische Ether mit einer Rate von 3 bis 90 Gewichtsanteilen pro Stunde pro 100 Gewichtsanteilen des zyklischen Säureanhydrids eingeleitet wird.

16. Verfahren nach einem der Ansprüche 1 bis 15, das das allmähliche Einleiten des Katalysators in das Reaktionssystem umfasst.

17. Verfahren nach einem der Ansprüche 1 bis 16, das in Gegenwart eines Lösungsmittels ausgeführt wird.

18. Verfahren nach einem der Ansprüche 1 bis 17, das bei einer Temperatur von 10 bis 250 °C ausgeführt wird.

19. Verfahren nach einem der Ansprüche 1 bis 18, das bei einem Druck vom Umgebungsdruck bis zu 5 MPa ausgeführt wird.

20. Verfahren nach einem der Ansprüche 1 bis 19, das den weiteren Schritt des Unterwerfens des aliphatischen Polyesters unter eine Reaktion mit einem Vernetzungsagens umfasst.

## Revendications

1. Procédé de production d'un polyester aliphatique comprenant la polymérisation par ouverture de cycle d'un anhydride d'acide cyclique avec un éther cyclique en présence d'au moins un catalyseur à base d'un composé du zirconium choisi parmi le 2-éthylhexanoate de zirconium, le carbonate de zirconium et l' hydroxyde de zirconium.

2. Procédé de production d'un polyester aliphatique comprenant la polymérisation par ouverture de cycle d'un anhydride d'acide cyclique ayant une pureté non inférieure à 99,5 % avec un éther cyclique ayant une pureté non inférieure à 99,5 %.

3. Procédé selon la revendication 2, dans lequel le polyester aliphatique résultant a une masse moléculaire moyenne en nombre non inférieure à 20 000.

4. Procédé selon la revendication 2 ou la revendication 3, qui est réalisé en présence d'un catalyseur.

5. Procédé selon la revendication 4, dans lequel le catalyseur est un composé du zirconium.

6. Procédé selon la revendication 5, dans lequel le catalyseur est un sel d'alcoxyzirconium ou d'oxyzirconium.

7. Procédé selon la revendication 4, dans lequel le catalyseur est un trialcoxyaluminium.

8. Procédé selon l'une quelconque des revendications 1 et 3 à 7, dans lequel le catalyseur est utilisé en une quantité de 0,001 à 10 % en poids, par rapport à l'anhydride d'acide cyclique et à l'éther cyclique.

9. Procédé selon l'une quelconque des revendications 1 à 8, dans lequel l'anhydride d'acide cyclique et l'éther cyclique sont utilisés dans un rapport molaire de l'anhydride d'acide cyclique à l'éther cyclique de 40/60 à 60/40.

10. Procédé selon l'une quelconque des revendications 1 à 9, dans lequel l'anhydride d'acide cyclique comprend au moins un groupe anhydride d'acide dans la molécule.

11. Procédé selon l'une quelconque des revendications 1 à 10, dans lequel l'anhydride d'acide cyclique comprend de l'anhydride succinique.

12. Procédé selon l'une quelconque des revendications 1 à 11, dans lequel l'éther cyclique comprend un groupe époxy dans la molécule.

13. Procédé-selon l'une quelconque des revendications 1 à 12, dans lequel l'éther cyclique comprend de l'oxyde d'éthylène.

14. Procédé selon l'une quelconque des revendications 1 à 13, qui comprend l'introduction progressive de l'éther cyclique dans le système réactionnel.

15. Procédé selon la revendication 14, dans lequel l'éther cyclique est introduit à un débit de 3 à 90 parties en poids par heure, pour 100 parties en poids de l'anhydride d'acide cyclique.

16. Procédé selon l'une quelconque des revendications 1 à 15, qui comprend l'introduction progressive du catalyseur dans le système réactionnel.

17. Procédé selon l'une quelconque des revendications 1 à 16, qui est réalisé en présence d'un solvant.

18. Procédé selon l'une quelconque des revendications 1 à 17, qui est réalisé à une température de 10 à 250°C.

19. Procédé selon l'une quelconque des revendications 1 à 18, qui est réalisé sous une pression allant de la pression ambiante à 5 MPa.

20. Procédé selon l'une quelconque des revendications 1 à 19, comprenant l'étape supplémentaire qui consiste à soumettre le polyester aliphatique à une réaction avec un agent de réticulation.
